# EUROPEAN PATENT APPLICATION

(11) **EP 4 477 488 A1**
(43) Date of publication of application: **18.12.2024**
(21) Application number: 23795134.8
(22) Date of filing: 19.04.2023
(51) Int. Cl.: B60W 50/00

(54) **AUTONOMOUS DRIVING METHOD AND SYSTEM, AND CONTROLLERS, ELECTRONIC DEVICE AND COMPUTER STORAGE MEDIUM**

(30) Priority: 24.04.2022 CN 202210434520
(71) Applicant: ZTE Corporation, Shenzhen, Guangdong 518057 (CN)
(72) Inventor: MA, Wei, Shenzhen, Guangdong 518057 (CN); LIU, Hongjun, Shenzhen, Guangdong 518057 (CN); WEN, Wu, Shenzhen, Guangdong 518057 (CN); LI, Dongmei, Shenzhen, Guangdong 518057 (CN)
(74) Representative: Canzler & Bergmeier Patentanwälte Partnerschaft mbB
(86) International application number: PCT/CN2023/089186
(87) International publication number: WO 2023/207701

(57) **Abstract**

An autonomous driving method, an auxiliary controller, a main controller, an autonomous driving system, an electronic device, and a computer-readable storage medium, which relate to the technical field of autonomous driving. The method is applied to the auxiliary controller and comprises: acquiring state monitoring information, wherein the state monitoring information is information that is obtained by monitoring the operation state of a main controller; and if it is determined, according to the state monitoring information, that the main controller operates abnormally, controlling the operation state of an autonomous driving vehicle.

## Description

### CROSS-REFERENCE TO RELATED APPLICATIONS

The present application claims the priority of Chinese Patent Application No. 202210434520.8, filed on April 24, 2022, the contents of which are incorporated herein in their entirety by reference.

### TECHNICAL FIELD

The present application relates to the field of autonomous driving technology, and in particular, to an autonomous driving method, an auxiliary controller, a main controller, an autonomous driving system, an electronic device, and a computer-readable storage medium.

### BACKGROUND

Autonomous vehicles, also known as self-driving automobiles, are intelligent vehicles that achieve unmanned driving through computer systems. The autonomous vehicles require to rely on a cooperation of multiple systems such as artificial intelligence, visual computing, radar, a monitoring device, a global positioning system and the like, to realize safe and automatic driving without human intervention. The safety of the autonomous vehicles and the safety response control of the autonomous vehicles during failures are key indicators of the autonomous vehicles.

During testing, autonomous vehicles may encounter various incontrollable situations, such as brake failure, incorrect steering timing, and/or running red lights. These incontrollable situations of the autonomous vehicles pose direct threats to safety of testers on the vehicles and security of equipment and property on the vehicles, which reduce practicality of the autonomous vehicles.

### SUMMARY

The present application provides an autonomous driving method, applied to an auxiliary controller, including: acquiring state monitoring information, the state monitoring information being information obtained by monitoring an operation state of a main controller; and in response to determining, according to the state monitoring information, that the main controller is operating abnormally, controlling an operation state of an autonomous vehicle.

The present application provides an autonomous driving method, applied to a main controller, including: generating state monitoring information; and sending the state monitoring information to an auxiliary controller, so that the auxiliary controller controls an operation state of an autonomous vehicle in response to determining that the main controller is operating abnormally according to the state monitoring information.

The present application provides an auxiliary controller, including: an acquisition module configured to acquire state monitoring information, the state monitoring information being information obtained by monitoring an operation state of a main controller; and a determination module configured to control an operation state of an autonomous vehicle in response to determining that the main controller is operating abnormally according to the state monitoring information.

The present application provides a main controller, including: a generation module configured to generate state monitoring information; and a sending module configured to send the state monitoring information to an auxiliary controller, so that the auxiliary controller controls an operation state of an autonomous vehicle in response to determining that the main controller is operating abnormally according to the state monitoring information.

The present application provides an autonomous driving system, including: a main controller, an auxiliary controller, an execution device and a data perception component which are connected communicatively; the auxiliary controller is configured to perform the above autonomous driving method applied to the auxiliary controller; the main controller is configured to perform the above autonomous driving method applied to the main controller; the execution device is configured to acquire control information sent by the main controller or the auxiliary controller, and maintain or change an operation state of an autonomous vehicle according to the control information; and the data perception component is configured to feed perception information back to the main controller or the auxiliary controller, so that the main controller or the auxiliary controller determines state monitoring information of the autonomous vehicle according to the perception information.

The present application provides an electronic device, including: at least one processor; and a memory having at least one computer program stored thereon, the at least one computer program, executed by the at least one processor, causes the at least one processor to implement the autonomous driving method described above.

The present application provides a computer-readable storage medium comprising a computer program, the computer program, executed by a processor, causes the processor to implement the autonomous driving method described above.

With respect to the above and other aspects of the present application and implementations thereof, further description is provided in the description of drawings, the description of embodiments and claims.

### DESCRIPTION OF DRAWINGS

Fig. 1 shows a schematic flowchart of an autonomous driving method according to the present application.
Fig. 2 shows a schematic structural diagram of an autonomous driving system according to the present application.
Fig. 3 is a schematic flowchart illustrating a method for determining a state of a main controller by an auxiliary controller according to the present application.
Fig. 4 is a schematic flowchart illustrating a method for determining monitoring information of a main controller by an auxiliary controller according to the present application.
Fig. 5 shows a schematic flowchart of an autonomous driving method according to the present application.
Fig. 6 shows a structural diagram of an auxiliary controller according to the present application.
Fig. 7 shows a structural diagram of a main controller according to the present application.
Fig. 8 shows a structural diagram of an autonomous driving system of the present application.
Fig. 9 shows a structural diagram of an autonomous driving system according to the present application.
FIG. 10 is a structural diagram illustrating an exemplary hardware architecture of a computing device for implementing an autonomous driving method and devices according to the present application.

### DESCRIPTION OF EMBODIMENTS

For the purpose of a better understanding of the purpose, features and advantages of the present application, detailed description will be given below in conjunction with the accompanying drawings. In the present application, the embodiments/implementations and features of the embodiments/implementations may be combined arbitrarily with each other without conflict.

Currently, a control method for controlling an autonomous vehicle is mainly realized by following modules: using a fault alarm module to monitor state information of the autonomous vehicle, to determine whether an operation state of a main control module of the autonomous vehicle is abnormal or not, and in response to determining that the operation state of the main control module is abnormal, using an auxiliary control module to acquire a fault scenario where the autonomous vehicle is located and a fault occurring in the autonomous vehicle, and controlling a driving state of the autonomous vehicle according to a control strategy determined by the auxiliary control module according to the fault scenario and the fault.

However, in the above control method, the main control module and the auxiliary control module are not completely isolated, and the auxiliary control module does not have a complete control function for controlling the autonomous vehicle, so that the auxiliary control module is not independent of a detection module, which cannot ensure a safe driving of the autonomous vehicle, resulting in that incontrollable situations may easily occur during the driving of the autonomous vehicle, and pose a threat to safety of testers on the vehicle, thereby practicality of the autonomous vehicle is reduced.

Based on above problems, the present application provides an autonomous driving method, an auxiliary controller, a main controller, an autonomous driving system, an electronic device, and a computer-readable storage medium, which can completely replace the main controller with the auxiliary controller in response to determining that the main controller of an autonomous vehicle is operating abnormally, so that the auxiliary controller goes on controlling the operation state of the autonomous vehicle, thereby reducing the occurrence of various incontrollable situations of the autonomous vehicle and reducing the probability of traffic accidents during the driving of the autonomous vehicle.

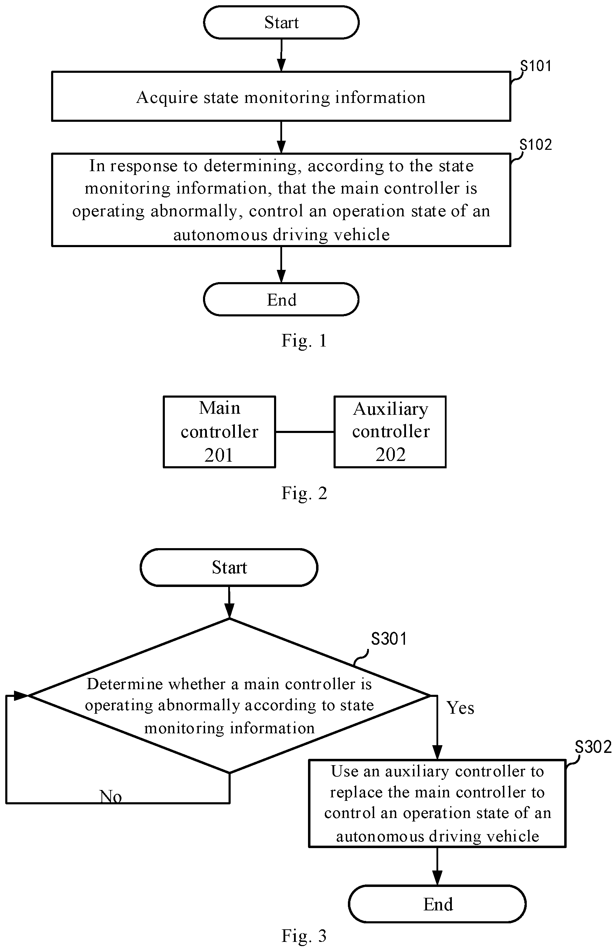

Fig. 1 shows a schematic flowchart of an autonomous driving method according to the present application. The autonomous driving method may be applied to an auxiliary controller. As shown in Fig. 1, the autonomous driving method in the present application may include, but is not limited to, the following steps S101 and S102.

At step S 101, acquiring state monitoring information.

The state monitoring information is information obtained by monitoring an operation state of a main controller.

At step S102, in response to determining, according to the state monitoring information, that the main controller is operating abnormally, controlling an operation state of an autonomous vehicle.

In the autonomous driving method applied to the auxiliary controller according to the present application, by acquiring the state monitoring information of the main controller that controls the autonomous vehicle to operate, the main controller can be monitored in real time, so that a control condition of the main controller on the autonomous vehicle can be obtained; in response to determining that the main controller is operating abnormally according to the state monitoring information, an abnormal situation of the main controller can be timely identified, allowing for intervention in time on the main controller, and the auxiliary controller currently used can replace the main controller, so that the auxiliary controller goes on controlling the operation state of the autonomous vehicle, to reduce the occurrence of various incontrollable situations (such as brake failure, errors of control information and the like) of the autonomous vehicle, and reduce the probability of traffic accidents during the driving of the autonomous vehicle, thereby improving the safety of testers on the vehicle, and enabling the autonomous vehicle to operate safely and effectively.

Fig. 2 shows a schematic structural diagram of an autonomous driving system according to the present application. As shown in Fig. 2, the autonomous driving system includes, but is not limited to, a main controller 201 and an auxiliary controller 202 which are connected communicatively.

For example, the main controller 201 and the auxiliary controller 202 may be connected through a wired connection technique or a wireless connection technique. The wired connection technique includes, but is not limited to, the following connection modes: a connection mode based on bus technology, a connection mode based on a proprietary wired communication protocol, and the like. The wireless connection technique includes, but is not limited to, the following connection modes: a TCP/IP-based connection mode, a connection mode based on a short-range wireless communication technology (e.g., a mobile hotspot (Wi-Fi) technology, a Vehicle-To-Everything (V2X) technology, a blue-tooth communication protocol, a satellite flash technology, etc.) protocol.

The auxiliary controller 202 monitors the main controller 201 by acquiring the state monitoring information (e.g., heartbeat messages, etc.) periodically sent by the main controller 201, to acquire the state monitoring information of the main controller 201 for controlling the operation of the autonomous vehicle.

For example, in order to realize real-time monitoring the main controller 201 by the auxiliary controller 202, to accurately monitor the operation state of the main controller 201, the main controller 201 may send heartbeat messages to the auxiliary controller 202 periodically, so that the auxiliary controller 202 can determine the operation state of the main controller 201 according to the received heartbeat messages.

For example, if the auxiliary controller 202 does not receive any heartbeat message sent by the main controller 201 in one or more preset time periods, or if the heartbeat message received by the auxiliary controller 202 in any preset time period is abnormal information (for example, detection information in a non-preset format, or a parameter in the heartbeat message is an abnormal value, etc.), it indicates that the main controller 201 is in an abnormal operation state; if the heartbeat message sent by the main controller 201 and received by the auxiliary controller 202 in each preset time period is normal information, it indicates that the main controller 201 is in a normal operation state.

The auxiliary controller 202 may perform emergency avoidance operations (e.g., pulling over and/or emergency braking, etc.) on the autonomous vehicle in response to determining that the main controller 201 is operating abnormally, so as to reduce the occurrence of traffic accidents of the autonomous vehicle.

In some implementations, the auxiliary controller 202 may further send control information to the main controller 201, so that the main controller 201 stops controlling the autonomous vehicle according to the control information, and completely transfers the control on the autonomous vehicle to the auxiliary controller 202, so as to ensure that the auxiliary controller 202 can accurately control the autonomous vehicle, to reduce the occurrence of traffic accidents of the autonomous vehicle, and improve the operation safety of the autonomous vehicle.

Fig. 3 is a schematic flowchart illustrating a method for determining a state of a main controller by an auxiliary controller according to the present application. As shown in Fig. 3, the method for determining the state of the main controller by the auxiliary controller includes, but is not limited to, the following steps S301 and S302.

At step S301, determining whether the main controller is operating abnormally according to the state monitoring information.

The state monitoring information includes: monitoring information in a preset period. For example, the monitoring information may include: heartbeat messages, and/or state information periodically reported, and the like.

It should be noted that, in a normal state, the main controller is responsible for controlling the operation state of the autonomous vehicle, and the auxiliary controller is configured to monitor the operation state of the main controller. The main controller periodically sends monitoring information to the auxiliary controllers in a process of main controlling, so that the auxiliary controller can monitor the operation state of the main controller in each monitoring period (such as 1 second or 5 seconds). It is determined that the main controller is operating abnormally if the monitoring information received by the auxiliary controller is abnormal information or the auxiliary controller does not receive any monitoring information in the preset period.

In some implementations, the state monitoring information may further include: a real-time data processing amount. By monitoring the real-time data processing amount of the main controller for real-time data processing, it is possible to measure whether the main controller is in an overload operation situation, thereby determining whether the main controller is operating abnormally or not, and improving the accuracy of determining the operation state of the main controller.

For example, if it is determined that the real-time data processing amount of the main controller exceeds a maximum data processing load threshold of the main controller, it indicates that the main controller is operating abnormally, and the main controller is to be intervened, for example, step S302 is to be performed. Conversely, if it is determined that the real-time data processing amount of the main controller is less than the maximum data processing load threshold of the main controller, it indicates that the main controller is operating normally.

If it is determined that the main controller is operating abnormally, step S302 is to be performed; if it is determined that the main controller is operating normally, step S301 is to be performed continuously, and the main controller continuously controls the operation state of the autonomous vehicle.

At step S302, using the auxiliary controller to replace the main controller to control the operation state of the autonomous vehicle.

For example, the auxiliary controller takes over the main controller immediately to control the operation state of the autonomous vehicle by the auxiliary controller.

According to the autonomous driving method provided in the present application, by using state monitoring information to determine whether the main controller is operating abnormally, the main controller can be monitored in real time, allowing for timely identifying potential faults that may exist in the main controller. In response to determining that the main controller is operating abnormally, the auxiliary controller is used to replace the main controller to control the operation state of the autonomous vehicle, so that the auxiliary controller can fully utilize its control function to completely control the autonomous vehicle, thereby reducing the risk of out-of-control of the autonomous vehicle due to faults of the main controller. Consequently, the probability of traffic accidents during the driving of the autonomous vehicle is reduced, safety of testers on the vehicle is improved, and the autonomous vehicle is enabled to operate safely and effectively.

In some implementations, if the auxiliary controller does not receive any monitoring information in the preset period, determining that the main controller is operating abnormally includes: accumulating a total number of abnormal occurrences receiving no monitoring information in the preset period to obtain the accumulated number of the abnormal occurrences; and if the accumulated number of the abnormal occurrences exceeds a preset number threshold, determining that the main controller is operating abnormally.

In some implementations, the autonomous driving method further includes: in response to determining that the accumulated number of the abnormal occurrences exceeds the preset number threshold, before determining the main controller is operating abnormally, initializing the number of abnormal occurrences in response to receiving any monitoring information in the preset period and the monitoring information being normal information.

The preset period may include a preset time interval such as 1 second, 2 seconds and the like. The above is only an example of the preset period, which may be specifically set as desired. Other preset periods not illustrated also fall within the protection scope of the present application and are not detailed herein.

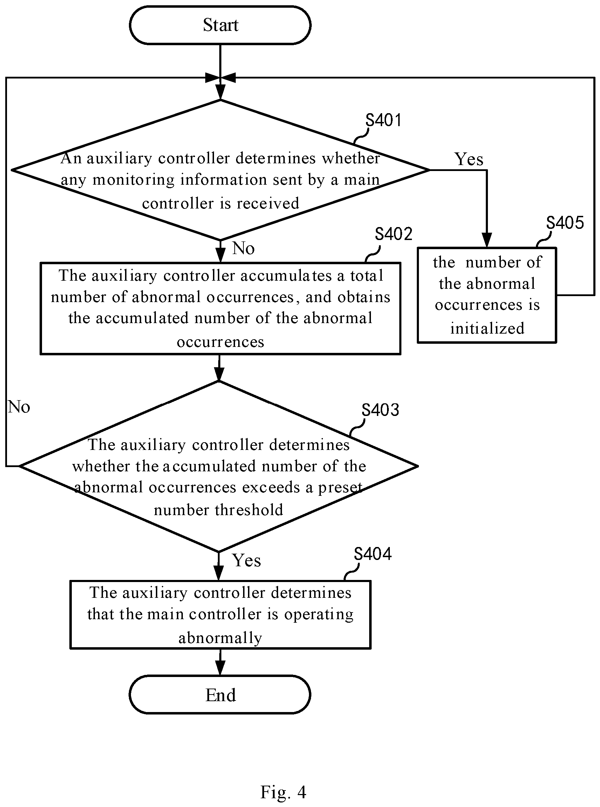

For example, Fig. 4 is a schematic flowchart illustrating a method for determining monitoring information of a main controller by an auxiliary controller according to the present application. As shown in Fig. 4, the method for determining the monitoring information of the main controller by the auxiliary controller includes, but is not limited to, the following steps S401 to S405.

At step S401, an auxiliary controller determines whether any monitoring information sent by a main controller is received.

The monitoring information may include: heartbeat messages, and/or state information periodically reported, and the like.

For example, a state counter may be used to monitor the monitoring information sent by the main controller.

If no monitoring information is received by the auxiliary controller in a preset period, step S402 is to be performed; if there is any monitoring information received by the auxiliary controller in the preset period and the monitoring information is normal information, step S405 is to be performed.

At step S402, the auxiliary controller accumulates a total number of abnormal occurrences receiving no monitoring information, and obtains the accumulated number of abnormal occurrences.

The number of abnormal occurrences may be accumulated in an arithmetic sequence mode. For example, the number of abnormal occurrences may be accumulated by adding a preset value (e.g., 1 or 2, etc.) each time, so as to ensure that the accumulated number of abnormal occurrences reflects regular changes.

At step S403, the auxiliary controller determines whether the accumulated number of abnormal occurrences exceeds a preset number threshold.

For example, the preset number threshold may be set to a value such as 3 or 5 to set a tolerance for monitoring the main controller.

If it is determined that the accumulated number of abnormal occurrences exceeds the preset number threshold (e.g., the accumulated number of abnormal occurrences is greater than or equal to the preset number threshold), step S404 is to be performed; and if it is determined that the accumulated number of abnormal occurrences does not exceed the preset number threshold (e.g., the accumulated number of abnormal occurrences is less than the preset number threshold), the method returns to step S401 to continue monitoring the monitoring information sent by the main controller.

At step S404, the auxiliary controller determines that the main controller is operating abnormally.

After performing step S404, the process of the method ends.

At step S405, the number of abnormal occurrences is initialized.

For example, the number of abnormal occurrences of the state counter is initialized to an initial preset value (e.g., the initial preset value is 0).

After performing step S405, the method returns to step S401, to continue to monitor the monitoring information sent by the main controller.

In this method for determining the monitoring information of the main controller by the auxiliary controller, the auxiliary controller monitors and determines the monitoring message sent by the main controller to determine whether the main controller is operating abnormally, so that the main controller can be accurately monitored, thereby reducing the probability of the autonomous vehicle incapable of operating due to faults of the main controller.

In some implementations, the acquiring state monitoring information (information obtained by monitoring the operation state of the main controller for controlling the operation of the autonomous vehicle) in step S 101 includes: receiving perception information; and determining the state monitoring information according to the perception information.

The perception information is information fed back by a first data perception component or information fed back by a second data perception component. The state monitoring information includes at least one of: speed information of driving of the autonomous vehicle, angle information of driving of the autonomous vehicle, or position information of the autonomous vehicle.

It should be noted that the second data perception component may be a component having the same function as the first data perception component. In a situation of a fault occurring in the first data perception component, the second data perception component may replace the first data perception component to perceive environmental information around the autonomous vehicle, state information of the autonomous vehicle, spatial information where the autonomous vehicle is located, and the like.

For example, different types of sensors, such as speed sensors, angle sensors, and positioning components, may be employed to implement the first data perception component and/or the second data perception component. By using different types of sensors to implement data perception components, the main controller and/or the auxiliary controller can acquire perception information in various dimensions, thereby enriching the state monitoring information, and by using such state monitoring information to determine the operation state of the autonomous vehicle, the accuracy of determining is improved.

In some implementations, the autonomous driving method further includes: acquiring auxiliary perception information after controlling the operation state of the autonomous vehicle in step S102; and updating the state monitoring information of the autonomous vehicle according to the auxiliary perception information.

The auxiliary perception information is information fed back by an auxiliary perception component. The auxiliary perception component is a component configured to assist the first data perception component or the second data perception component in perceiving environmental factors. For example, the auxiliary perception component may include: a weather sensor (e.g., a rain sensor, etc.), a temperature sensor, or the like.

By acquiring the auxiliary perception information fed back from the auxiliary perception component and using the auxiliary perception information to update the state monitoring information of the autonomous vehicle, the state monitoring information can better represent the environment information around the autonomous vehicle, enabling the auxiliary controller to better control the autonomous vehicle so that the accuracy of controlling is improved.

In some implementations, the perception information includes at least one of: environment image information, spatial information where the autonomous vehicle is located, vehicle state information, or communication information.

By representing the perception information through the information in different dimensions, the auxiliary controller or the main control can obtain diversified information, and therefore the state monitoring information of the autonomous vehicle is to be accurately determined according to the perception information, then the autonomous vehicle is to be accurately controlled, and the accuracy of operation of the autonomous vehicle is improved.

In some implementations, the controlling the operation state of the autonomous vehicle in step S 102 includes: cutting off a control of the main controller over the autonomous vehicle according to a method of preemption; and controlling the operation state of the autonomous vehicle according to a risk avoidance information.

The risk avoidance information is information determined based on abnormal information of operation of the main controller (e.g., fault information or error information of operation, etc.) and/or perception information fed back from a data perception component (e.g., the first data perception component or the second data perception component, etc.). The method of preemption may be achieved through a competition mode, allowing the main controller or the auxiliary controller to get a control on the autonomous vehicle. For example, if a fault occurs in the main controller, the auxiliary controller will take over the control on the autonomous vehicle, and the control on the autonomous vehicle by the main controller is cut off, so that the autonomous vehicle is controlled by only one controller (i.e., the auxiliary controller), so as to guarantee the safety of the driving of the autonomous vehicle.

By using the risk avoidance information, the auxiliary controller can clearly know how to control the autonomous vehicle to avoid potential dangerous situations (such as collisions between vehicles and the like), thereby enabling the auxiliary controller to control the operation state of the autonomous vehicle more accurately.

For example, the auxiliary controller quickly activates protective airbags on seats according to the risk avoidance information so as to ensure the safety of passenger on the vehicle. For another example, the auxiliary controller controls the autonomous vehicle to pull over according to the risk avoidance information so as to avoid a collision with other vehicles, thereby improving the accuracy of the autonomous vehicle for dealing with dangerous situations.

In some implementations, the controlling the operation state of the autonomous vehicle according to the risk avoidance information includes: generating a control instruction according to the risk avoidance information; and sending the control instruction to an actuator so that the actuator can control the operation state of the autonomous vehicle according to the control instruction.

The actuator is communicatively connected with the auxiliary controller and the main controller respectively. The actuator may be at least one of a power system component, a steering system component, or a braking system component.

By sending the control instruction to the actuator, the actuator can identify a potential risk based on the control instruction and avoid the risk (such as keep away from obstacles), thereby improving the safety of operation of the autonomous vehicle.

In some implementations, the auxiliary controller includes an auxiliary actuator and the main controller includes a master actuator; the cutting off the control of the main controller over the autonomous vehicle according to the method of preemption includes: cutting off the control of the main actuator over the autonomous vehicle according to the method of preemption; the controlling the operation state of the autonomous vehicle according to the risk avoidance information includes: controlling the auxiliary actuator to control the operation state of the autonomous vehicle according to the risk avoidance information.

The auxiliary actuator and the main actuator are configured to control the operation state of the autonomous vehicle, in order to change or maintain the operation state of the autonomous vehicle. It should be noted that the main controller may include the first data perception component, and the auxiliary controller may include the second data perception component. By perceiving the environment information around the autonomous vehicle through different data perception components, the risk avoidance information is generated according to the perceived information, and the risk avoidance information enables the autonomous vehicle to keep away from objects that may be dangerous.

By using the method of preemption to cut off the control of the main actuator over the autonomous vehicle, the probability of incontrollable situations of the autonomous vehicle due to a fault of the main actuator is reduced, and then according to the risk avoidance information, the auxiliary controller can control the auxiliary actuator to accurately control the autonomous vehicle, thereby improving the safety of operation of the autonomous vehicle.

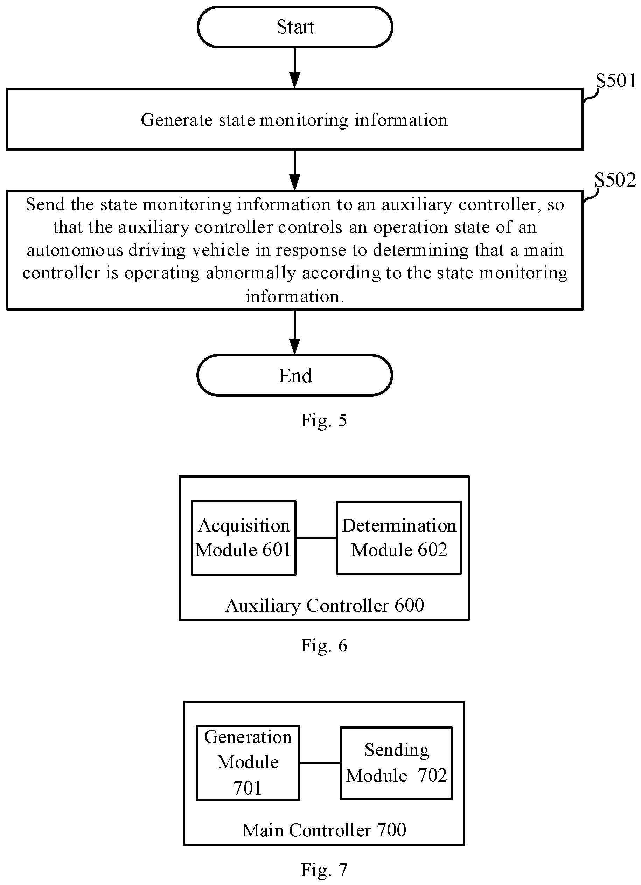

Fig. 5 shows a schematic flowchart of an autonomous driving method according to the present application. The autonomous driving method may be applied to a main controller. As shown in Fig. 5, the autonomous driving method provided in the present application may include, but is not limited to, the following steps S501 and S502.

At step S501, generating state monitoring information.

The state monitoring information includes at least one of: a speed of driving of an autonomous vehicle, an angle of driving of the autonomous vehicle, and a driving route of the autonomous vehicle.

By monitoring the state information of the autonomous vehicle in different dimensions, the state monitoring information such as speed information, angle information and position information of the autonomous vehicle during driving can be obtained, and the state monitoring information can represent an operation situation of the autonomous vehicle, therefore the operation situation of the autonomous vehicle can be monitored during the autonomous vehicle being controlled, so that the autonomous vehicle can operate stably.

At step S502, sending the state monitoring information to an auxiliary controller, so that the auxiliary controller controls an operation state of the autonomous vehicle in response to determining that the main controller is operating abnormally according to the state monitoring information.

It should be noted that the state monitoring information may be sent to the auxiliary controller at a preset time interval, so that the auxiliary controller can monitor the main controller periodically. If the auxiliary controller analyzes the received state monitoring information and determines that the main controller is operating abnormally, the auxiliary controller replaces the main controller to control the operation state of the autonomous vehicle.

For example, if any heartbeat message sent by the main controller at a regular time interval and received by the auxiliary controller includes messy codes, or if no heartbeat message is received by the auxiliary controller from the main controller in a preset period, and thus it is determined that there is an abnormal interruption of connection of the main controller, the auxiliary controller replaces the main controller to control the operation state of the autonomous vehicle, to reduce the probability of various incontrollable situations (such as brake failure, errors of control information and the like) of the autonomous vehicle, and reduce the probability of traffic accidents during the driving of the autonomous vehicle.

The auxiliary controller replacing the main controller may include: using the auxiliary controller to complete all control functions of the main controller and keeping the main controller turned off. The auxiliary controller replacing the main controller may also include: using the auxiliary controller to assist the main controller to control the autonomous vehicle, in order to compensate for deficiencies of controlling the autonomous vehicle by only the main controller, thereby realizing a precise control of the autonomous vehicle.

In the autonomous driving method applied to the main controller in the present application, the operation state of the autonomous vehicle is controlled, and the state monitoring information is generated, the operation situation of the autonomous vehicle can be represented through the state monitoring information, facilitating the main controller to perform real-time and stable controlling on the autonomous vehicle; and the main controller sends the state monitoring information to the auxiliary controller, so that the auxiliary controller replaces the main controller to control the operation state of the autonomous vehicle if the auxiliary controller determines that the main controller is operating abnormally according to the state monitoring information, thereby reducing the probability of various incontrollable situations of the autonomous vehicle and reducing the probability of traffic accidents during the driving of the autonomous vehicle.

In some implementations, the autonomous driving method further includes: after sending the state monitoring information to the auxiliary controller in step S502, stopping controlling the operation state of the autonomous vehicle by the main controller in response to determining that the main controller has a fault; and generating alarm information.

The alarm information is configured to alert an operation end for operating the autonomous vehicle that the autonomous vehicle is abnormal.

For example, if the auxiliary controller detects that the main controller has a fault, the main controller will receive shutdown information sent by the auxiliary controller, and the shutdown information is configured to inform the main controller to stop operating, so that the auxiliary controller can completely replace the main controller to control the autonomous vehicle, thereby reducing the probability of traffic accidents of the autonomous vehicle caused by the abnormality of the main controller.

Before stopping operating, the main controller will further send the generated alarm information to the server, so that the server can know that the main controller of the autonomous vehicle has a fault, and forward the alarm information to the operation end for operating the autonomous vehicle, so as to acquire intervention information actively input from the operation end for operating the autonomous vehicle, reducing the probability of incontrollable situations (i.e., situations of out of control) of the autonomous vehicle, and improving the safety of the driving of the autonomous vehicle.

Fig. 6 shows a structural diagram of an auxiliary controller according to the present application. As shown in Fig. 6, the auxiliary controller 600 includes, but is not limited to, an acquisition module 601 and a determination module 602.

The acquisition module 601 is configured to acquire state monitoring information, and the state monitoring information is information obtained by monitoring an operation state of a main controller.

The determination module 602 is configured to control an operation state of an autonomous vehicle in response to determining that the main controller is operating abnormally according to the state monitoring information.

In the auxiliary controller of the present application, the state monitoring information is obtained through the acquisition module 601, the state monitoring information is obtained by monitoring the operation state of the main controller, and the main controller can be monitored in real time, so that a condition of the main controller controlling the autonomous vehicle can be obtained; the determination module 602 can timely identify an abnormal situation of the main controller in response to determining that the main controller is operating abnormally according to the state monitoring information, allowing for a rapid intervention on the main controller, so that the auxiliary controller used currently replaces the main controller, to continue to control the operation state of the autonomous vehicle, which helps to reduce the probability of various incontrollable situations of the autonomous vehicle, and reduce the probability of traffic accidents during the driving of the autonomous vehicle, thus improving the safety of testers on the vehicle, and enabling the autonomous vehicle to operate safely and effectively.

Fig. 7 shows a structural diagram of a main controller according to the present application. As shown in Fig. 7, the main controller 700 includes, but is not limited to, a generation module 701 and a sending module 702.

The generation module 701 is configured to generate state monitoring information.

The sending module 702 is configured to send the state monitoring information to an auxiliary controller, so that the auxiliary controller controls the operation state of an autonomous vehicle in response to determining that the main controller is operating abnormally according to the state monitoring information.

In the main controller of the present application, the state monitoring information is generated through the generation module 701, the operation situation of the autonomous vehicle can be represented through the state monitoring information, facilitating the main controller to perform real-time and stable control on the autonomous vehicle; the sending module 702 is configured to send the state monitoring information to the auxiliary controller, so that the auxiliary controller replaces the main controller to control the operation state of the autonomous vehicle in response to the auxiliary controller determining that the main controller is operating abnormally according to the state monitoring information, thereby reducing the probability of various incontrollable situations of the autonomous vehicle, and reducing the probability of traffic accidents during the driving of the autonomous vehicle.

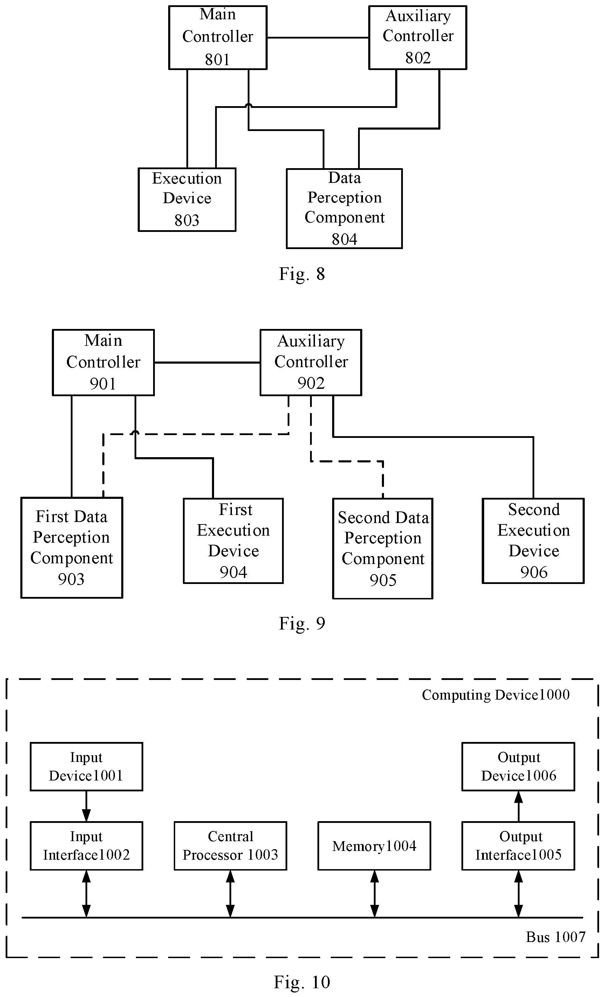

Fig. 8 shows a structural diagram of an autonomous driving system according to the present application. As shown in Fig. 8, the autonomous driving system includes, but is not limited to, the followings: a main controller 801, an auxiliary controller 802, an execution device 803, and a data perception component 804 which are connected communicatively.

The main controller 801 is configured to perform the autonomous driving method applied to the main controller according to the present application.

The auxiliary controller 802 is configured to perform the autonomous driving method applied to the auxiliary controller according to the present application.

The execution device 803 is configured to acquire control information sent by the main controller 801 or the auxiliary controller 802, and maintain or change an operation state of the autonomous vehicle according to the control information.

The data perception component 804 is configured to feed perception information back to the main controller 801 or the auxiliary controller 802, so that the main controller 801 or the auxiliary controller 802 can determine state monitoring information of the autonomous vehicle according to the perception information.

The main controller 801 is connected to the auxiliary controller 802, the data perception component 804 and the execution device 803 respectively. The main controller 801 is configured to control the operation state of the autonomous vehicle in a normal state, for example, the main controller 801 controls the execution device 803 to enable the autonomous vehicle to perform operations such as driving or stopping, and/or, receives perception information sent by the data perception component 804, and/or periodically sends state monitoring information (e.g., heartbeat message, etc.) to the auxiliary controller 802.

The auxiliary controller 802 is configured to monitor the operation state of the main controller 801, for example, to confirm whether the main controller 801 is operating normally by monitoring heartbeat messages periodically sent by the main controller 801, and the like. If an abnormality occurs in the main controller 801, the auxiliary controller 802 takes over the control function of the main controller 801 to control the operation of the execution device 803 connected to the auxiliary controller 802. Moreover, by obtaining the perception information sent by the data perception component 804 connected to the auxiliary controller 802, the auxiliary controller 802 realizes an auxiliary control on the autonomous vehicle.

In some implementations, the auxiliary controller 802 may only perform a risk avoidance operation on the autonomous vehicle. For example, if the main controller has a fault, the auxiliary controller 802 controls the autonomous vehicle (e.g., sends a control signal to the execution device 803) to safely pull over, activates relevant alarm signals (e.g., a double flashing light, etc.), and sends fault information to a server, or the like.

It should be noted that the auxiliary controller 802 may be an autonomous control system with relatively simple functions, and only implements simple risk avoidance functions such as emergency braking, and/or side parking; the auxiliary controller 802 may also receive a control instruction input from external, and implement a control function on the execution device 803 according to the control instruction, so as to control the operation state of the autonomous vehicle; the auxiliary controller 802 may also be a device capable of realizing all control functions of the main controller 801, to replace the main controller 801 for controlling the autonomous vehicle.

The execution device 803 is configured to receive control information sent by the main controller 801 or the auxiliary controller 802, to control the operation state of the autonomous vehicle. It should be noted that, after the auxiliary controller 802 takes over the control on the autonomous vehicle, the execution device 803 will no longer receive any control instruction sent by the main controller 801. In this case, the execution device 803 controls the autonomous vehicle according to the control information received from the auxiliary controller 802, so as to improve the accuracy of the control on the autonomous vehicle. The execution device 803 includes at least one of: a power system component, a steering system component, or a braking system component. By using the execution device 803 to control the autonomous vehicle, the operation state (e.g., moving direction, driving speed, etc.) of the autonomous vehicle may be changed or maintained.

The data perception component 804 is configured to perceive state information of the autonomous vehicle during driving, environmental information around the autonomous vehicle, and the like. The data perception component 804 is communicatively connected with the main controller 801 and the auxiliary controller 802 respectively, and can provide information perceived by the data perception component 804 to the main controller 801 and the auxiliary controller 802, so that the main controller 801 and/or the auxiliary controller 802 can determine state monitoring information of the autonomous vehicle according to the perceived information, thereby realizing an autonomous control on the autonomous vehicle.

The data perception component 804 includes, but is not limited to, at least one of: a perception element for perceiving an external environment, a perception instrument for perceiving a state of the vehicle, and a communication element.

For example, the perception element for perceiving the external environment may include: a camera and/or a radar; the perception instrument for perceiving the state of the vehicle may include at least one of: a gyroscope, a tachometer, an accelerometer, a steering angle sensor, a Global Positioning System (GPS) or a Beidou device; the communication element may acquire at least one of the following communication information: external communication information, information of an electronic map, real-time traffic information, or the like.

Environment image information may be obtained through the perception element for perceiving the external environment, and the spatial information where the autonomous vehicle is located, the state information of the autonomous vehicle and the like may be obtained through the perception instrument for perceiving the state of the vehicle.

Fig. 9 shows a structural diagram of an autonomous driving system according to the present application. As shown in Fig. 9, the autonomous driving system includes, but is not limited to, the following devices including a main controller 901, an auxiliary controller 902, a first data perception component 903, a first execution device 904, a second data perception component 905, and a second execution device 906 which are connected communicatively.

The main controller 901 has the same function as the main controller 801 shown in Fig. 8, and the auxiliary controller 902 has the same function as the auxiliary controller 802 shown in Fig. 8.

The first data perception component 903 and the second data perception component 905 each can realize the function of the data perception component 804 shown in Fig. 8. In addition, the auxiliary controller 902 may be connected to the first data perception component 903 to obtain perception information fed back by the first data perception component 903, or , the auxiliary controller 902 may be connected to the second data perception component 905 to obtain auxiliary perception information fed back by the second data perception component 905, and the auxiliary perception information is configured to update state monitoring information of the autonomous vehicle, so that the auxiliary controller 902 can obtain more accurate operation information of the autonomous vehicle.

In some implementations, the first data perception component 903 and the second data perception component 905 each may be implemented by multiple different sensors to enrich perception information of the autonomous vehicle in multiple different dimensions.

The first execution device 904 and the second execution device 906 each can realize the function of the execution device 803 shown in Fig. 8.

In some implementations, the second execution device 906 has a higher priority than the first execution device 904. During the second execution device 906 being activated, the first execution device 904 is in a disabled state, i.e., the first execution device 904 stops controlling the autonomous vehicle, so that the second execution device 906 can replace the first execution device 904 and perform a full control on the autonomous vehicle.

In the autonomous driving system of the present application, the second data perception component 905 and the second execution device 906 can enable the auxiliary controller 902 to obtain more detailed state information and perception information during the driving of the autonomous vehicle under the situation that the autonomous vehicle is controlled by the auxiliary controller 902, so as to help the auxiliary controller 902 to better control the autonomous vehicle, which reduces the probability of various incontrollable situations (such as brake failure, errors of control information and the like) of the autonomous vehicle, reduces the probability of traffic accidents during the driving of the autonomous vehicle, and improves the accuracy of the control on the autonomous vehicle.

It is to be understood that the present application is not limited to the specific configuration and processing described above and shown in the drawings. For convenience and simplicity of description, detailed description of any known method is omitted here, and for specific working processes of the system, the module and the unit described above, reference may be made to corresponding processes in the foregoing method, and details are not repeated here.

FIG. 10 is a structural diagram illustrating an exemplary hardware architecture of a computing device for implementing an autonomous driving method and devices according to the present application.

As shown in Fig. 10, the computing device 1000 includes an input device 1001, an input interface 1002, a central processor 1003, a memory 1004, an output interface 1005, and an output device 1006. The input interface 1002, the central processor 1003, the memory 1004, and the output interface 1005 are connected to each other through a bus 1007, and the input device 1001 and the output device 1006 are connected to the bus 1007 through the input interface 1002 and the output interface 1005, respectively, and then connected to other components of the computing device 1000.

The input device 1001 receives input information from outside, and transmits the input information to the central processor 1003 through the input interface 1002; the central processor 1003 processes the input information based on computer-executable instructions stored in the memory 1004 to generate output information, temporarily or permanently stores the output information in the memory 1004, and then transfers the output information to the output device 1006 through the output interface 1005; the output device 1006 outputs the output information to an exterior of the computing device 1000 to be used.

In some implementations, the computing device shown in Fig. 10 may be implemented as an electronic device, which may include: a memory configured to store a computer program; and a processor configured to execute the computer program stored in the memory to perform the above-described autonomous driving method.

In some implementations, the computing device shown in Fig. 10 may be implemented as an autonomous driving system, which may include: a memory configured to store a computer program; and a processor configured to execute the computer program stored in the memory to perform the above-described autonomous driving method.

The present application further provides a computer-readable storage medium storing a computer program thereon, the computer program, when executed by a processor, causes the processor to implement the above-described autonomous driving method.

The above description is only for the exemplary embodiments of the present application, and is not intended to limit the scope of the present application. In general, the various embodiments/implementations of the present application may be implemented in hardware or special purpose circuits, software, logic or any combination thereof. For example, some aspects may be implemented in hardware, and other aspects may be implemented in firmware or software which may be executed by a controller, a microprocessor or any other computing device, although the present application is not limited thereto.

The embodiments/implementations of the present application may be implemented by a data processor of a mobile device executing computer program instructions, for example in a processor entity, or by hardware, or by a combination of software and hardware. The computer program instructions may be assembly instructions, instruction set architecture (ISA) instructions, machine-related instructions, microcode, firmware instructions, state setting data, or source or object code written in any combination of one or more programming languages.

The block diagrams of any logic flows in the figures of the present application may represent program steps, or may represent interconnected logic circuits, modules, and functions, or may represent a combination of program steps and logic circuits, modules, and functions. The computer program may be stored in the memory. The memory may be of any type suitable to the local technical environment and may be implemented by using any suitable data storage technology, such as, but not limited to, Read Only Memory (ROM), Random Access Memory (RAM), optical storage devices and systems (digital versatile disks, DVDs or CD disks), or the like. The computer readable medium may include a non-transitory storage medium. The data processor may be of any type suitable to the local technical environment, such as, but not limited to, general purpose computers, special purpose computers, microprocessors, Digital Signal Processors (DSPs), Application Specific Integrated Circuits (ASICs), programmable logic devices (FGPAs), and processors based on a multi-core processor architecture.

The foregoing has provided, by way of exemplary and non-limiting examples, a detailed description of exemplary embodiments/implementations of the present application. Various modifications and adaptations to the foregoing embodiments may be apparent to the person skilled in the relevant arts without departing from the scope of the present application, in view of the accompanying drawings and the appended claims. Accordingly, the proper scope of the present application is to be determined according to the claims.

## Claims

1. An autonomous driving method, applied to an auxiliary controller, comprising:
acquiring state monitoring information, wherein the state monitoring information is information obtained by monitoring an operation state of a main controller; and
controlling an operation state of an autonomous vehicle in response to determining that the main controller is operating abnormally according to the state monitoring information.

2. The method of claim 1, wherein the state monitoring information comprises: monitoring information in a preset period;
the determining that the main controller is operating abnormally according to the state monitoring information comprises:
determining that the main controller is operating abnormally in response to the received monitoring information being abnormal information, or no monitoring information being received in the preset period.

3. The method of claim 2, wherein the determining that the main controller is operating abnormally in response to no monitoring information being received in the preset period comprises:
accumulating a total number of abnormal occurrences receiving no monitoring information in the preset period to obtain the accumulated number of the abnormal occurrences; and
determining that the main controller is operating abnormally in response to the accumulated number of the abnormal occurrences exceeding a preset number threshold.

4. The method of claim 3, further comprising:
in response to determining that the accumulated number of the abnormal occurrences exceeds the preset number threshold, before determining that the main controller is operating abnormally, initializing the number of abnormal occurrences in response to receiving any monitoring information in the preset period and the monitoring information being normal information.

5. The method of claim 1, wherein the acquiring state monitoring information comprises:
receiving perception information, wherein the perception information is information fed back by a first data perception component or a second data perception component; and
determining the state monitoring information according to the perception information,
wherein the state monitoring information comprises at least one of: speed information of driving of the autonomous vehicle, angle information of driving of the autonomous vehicle, or position information of the autonomous vehicle.

6. The method of claim 5, further comprising:
acquiring auxiliary perception information after controlling the operation state of the autonomous vehicle, wherein the auxiliary perception information is information fed back by an auxiliary perception component; and
updating the state monitoring information of the autonomous vehicle according to the auxiliary perception information.

7. The method of claim 5 or 6, wherein the perception information comprises at least one of: environment image information, spatial information where the autonomous vehicle is located, information of a state of the autonomous vehicle, or communication information.

8. The method of claim 1, wherein the controlling an operation state of an autonomous vehicle comprises:
cutting off a control of the main controller over the autonomous vehicle according to a method of preemption; and
controlling the operation state of the autonomous vehicle according to risk avoidance information, wherein the risk avoidance information is information determined based on at least one of: abnormal information of operation of the main controller, or perception information fed back from a data perception component.

9. The method of claim 8, wherein the controlling the operation state of the autonomous vehicle according to the risk avoidance information comprises:
generating a control instruction according to the risk avoiding information; and
sending the control instruction to an actuator so that the actuator controls the operation state of the autonomous vehicle according to the control instruction,
wherein the actuator is communicatively connected with the main controller and the auxiliary controller respectively.

10. The method of claim 8, wherein the auxiliary controller comprises an auxiliary actuator, the main controller comprises a master actuator, and the auxiliary actuator and the master actuator each are configured to control the operation state of the autonomous vehicle;
the cutting off the control of the main controller over the autonomous vehicle according to the method of preemption comprises: cutting off the control of the main actuator over the autonomous vehicle according to the method of preemption;
the controlling the operation state of the autonomous vehicle according to the risk avoiding information comprises: controlling the auxiliary actuator to control the operation state of the autonomous vehicle according to the risk avoiding information.

11. An autonomous driving method, applied to a main controller, comprising:
generating state monitoring information; and
sending the state monitoring information to an auxiliary controller, so that the auxiliary controller controls an operation state of an autonomous vehicle in response to determining that the main controller is operating abnormally according to the state monitoring information.

12. The method of claim 11, further comprising:
after sending the state monitoring information to the auxiliary controller, stopping controlling the operation state of the autonomous vehicle in response to determining that the main controller has a fault; and
generating alarm information, wherein the alarm information is configured to alert an operation end for operating the autonomous vehicle that the autonomous vehicle is abnormal.

13. An auxiliary controller, comprising:
an acquisition module, configured to acquire state monitoring information, wherein the state monitoring information is information obtained by monitoring an operation state of a main controller; and
a determination module, configured to control an operation state of an autonomous vehicle in response to determining that the main controller is operating abnormally according to the state monitoring information.

14. A main controller, comprising:
a generation module, configured to generate state monitoring information; and
a sending module, configured to send the state monitoring information to an auxiliary controller, so that the auxiliary controller controls the operation state of the autonomous vehicle in response to determining that the main controller is operating abnormally according to the state monitoring information.

15. An autonomous driving system, comprising: a main controller, an auxiliary controller, an execution device and a data perception component which are connected communicatively;
the auxiliary controller is configured to perform the autonomous driving method according to any one of claims 1 to 10;
the main controller is configured to perform the autonomous driving method according to any one of claims 11 and 12;
the execution device is configured to acquire control information sent by the main controller or the auxiliary controller, and maintain or change an operation state of an autonomous vehicle according to the control information; and
the data perception component is configured to feed perception information back to the main controller or the auxiliary controller, so that the main controller or the auxiliary controller determines state monitoring information of the autonomous vehicle according to the perception information.

16. An electronic device, comprising:
at least one processor; and
a memory having at least one computer program stored thereon, the at least one computer program, executed by the at least one processor, causes the at least one processor to implement the autonomous driving method of any one of claims 1 to 12.

17. A computer-readable storage medium, storing a computer program thereon, the computer program, executed by a processor, causes the processor to implement the autonomous driving method of any one of claims 1 to 12.
